# EUROPÄISCHE PATENTSCHRIFT

(11) **EP 2 572 017 B1**
(45) Veröffentlichungstag und Bekanntmachung des Hinweises auf die Patenterteilung: **22.07.2020**
(21) Anmeldenummer: 10765362.8
(22) Anmeldetag: 01.09.2010
(51) Int. Cl.: C23F 11/10, C23F 11/14, C02F 1/00, C02F 5/12

(54) **MITTEL ZUR VERBESSERUNG DES WÄRMEÜBERGANGES IN DAMPFERZEUGUNGSANLAGEN**
MEDIUM FOR IMPROVING THE HEAT TRANSFER IN STEAM GENERATING PLANTS
MOYEN DESTINÉ À AMÉLIORER LE TRANSFERT DE CHALEUR DANS DES INSTALLATIONS DE PRODUCTION DE VAPEUR

(43) Veröffentlichungstag der Anmeldung: 27.03.2013
(73) Patentinhaber: Kurita Water Industries Ltd., Nakano-ku, Tokyo 164-0001 (JP)
(72) Erfinder: HATER, Wolfgang, 41564 Kaarst (DE); ZUM KOLK, Christian, 40699 Erkrath (DE); DE BACHE, Andre, 45479 Mühlheim (DE)
(74) Vertreter: Reitstötter Kinzebach
(86) Internationale Anmeldenummer: PCT/EP2010/005364
(87) Internationale Veröffentlichungsnummer: WO 2011/144230

(56) Entgegenhaltungen:
- EP-A1- 0 134 365
- EP-A1- 0 716 045
- EP-A1- 0 807 696
- EP-A1- 1 045 045
- US-A- 3 860 430

## Beschreibung

Die vorliegende Erfindung bezieht sich auf ein Mittel in Form einer wässerigen Mischung zur Verbesserung des Wärmeübergangskoeffizienten und seine Verwendung in der Kraftwerkstechnik, insbesondere in Dampferzeugungsanlagen.

Zum Betreiben von Dampferzeugungsanlagen wird stets Wasser benötigt. Überall wo Wasser eingesetzt wird, sei es als Kühlwasser oder als Medium der Wärmeübertragung, muss es mit Wasserkonditionierungsmitteln behandelt werden. Prozesswässer zum Betreiben von Dampferzeugungsanlagen können stets Salze, vor allem Alkali- und Erdalkalimetallkationen in gelöster Form enthalten, z.B. als Hydrogencarbonate, die in Zuge der Aufkonzentrierung durch verdampfendes Wasser sich dann als Beläge an die Oberfläche der Kessel und der Rohre von Wärmeübertragungsanlagen als Kesselstein niederschlagen können. Dadurch wird die Wärmeübertragung der Anlagen beeinträchtigt, es kann zu Überhitzungen kommen. Aber auch die Gefahr der Korrosion der Rohre und Kesselmaterialien besteht.

Die Betreiber solcher Anlagen sind aus ökonomischen - und Sicherheitsgründen gehalten, die Ausfällungen und die Korrosion zu vermeiden bzw. vorzubeugen durch ein entsprechendes Wasserkonditionierungskonzept, um die Funktionen der Anlagen nicht zu gefährden.

Durch die vollständige Entfernung der Mineralsalze aus dem Wasser z. B. über Ionenaustauscher oder Umkehrosmose, kann die Belagbildung durch Ausfällung unlöslicher Salze wie Calciumcarbonat r zu wirtschaftlich zu vertretenden Kosten vermieden werden.

Eine weitere Methode, um Korrosion zu vermeiden, ist die Alkalisierung des Wasser-Dampf-Kreislaufs, z. B. durch Zusatz von alkalisierenden Konditionierungsmitteln, welche durch Erhöhung des pH-Wertes die Herauslösung des Eisens bei hohen Temperaturen aus den Apparateteilen unterbindet. Diese Mittel können anorganische Verbindungen wie z. B. Phosphate, aber auch organische Konditionierungsmittel sein.

Im Stand der Technik wurde die Verwendung filmbildender Amine zur Korrosionsinhibierung vielfach beschrieben.

So wird in der EP 0 134 365 B1 ein Mittel zur Korrosionsinhibierung in Dampferzeugern und zur Konditionierung von Kesselspeisewasser in Kraftwerken beschrieben. Das Mittel besteht aus einer Mischung aliphatischer Polyamine mit 12 bis 22 C-Atomen im aliphatischen Rest, aus alkalisierendem Amin, z. B. das Cyclohexylamin und ein Aminoethanol.

Jede der Druckschriften EP 0 807 696 A1, EP 1 045 045 A1, US 3 860 430 A, EP 0 716 045 A1 offenbart das Einsetzen eines fimbildenden Amins mit der allgemeinen Formel: R-(NH-(CH₂)m)n-NH₂, wobei R ist C12-C22, mist 1-8, n ist 0-7, in Mengen bis 15 Gew.% in einer Dampferzeugeranlage.

In der EP 0 184 558 B1 ist ein Verfahren zur Verhinderung von Kesselstein bekannt gemacht worden, worin dem zu behandelnden Wasser ein synergistisch wirkendes Gemisch aus Salzen von Polymeren ethylenisch ungesättigter Carbonsäuren und aliphatischen Polyaminen zugegeben wird.

Die EP 0 463 714 A1 beschreibt eine ternäre Zusammensetzung aus Dihydroxyaceton, katalytischen Mengen an Hydrochinon und flüchtigen Aminen zur Eliminierung von Sauerstoff aus den Speisewässern und Vermeidung der Korrosion. In dieser Zusammensetzung können auch sog. "filmbildende Amine" enthalten sein.

EP 0774 017 B1 beschreibt einen Korrosionsinhibitor aus einer Polysulfonsäure, die zusätzlich Polyamine, insbesondere und ein Dispersionsmittel in Form von oxyalkylierten Polyaminen enthält.

Neben Korrosion und Kesselsteinbildung ist der sichere Wärmeübergang beim Sieden von Wasser in Dampferzeugern ein sehr wichtiges Problem, das ständig wieder an Aktualität gewinnt. Ein besonderes Problem ist dabei das eventuelle Einsetzen des Burnout I Effektes, d. h. ein Umschlagen des Blasensiedens in ein Filmsieden infolge zu hoher Zahl von Dampfblasen-Bildungszentren, aber auch ein Burnout III, d. h. eine Siedekriese infolge der Unterdrückung von aktivierbaren Dampfsiedeblasenbildungszentren. Ein negativer Einfluss wurde sowohl von organischen, als auch anorganischen Konditionierungsmitteln erwartet. Die Erhöhung der Sicherheit bei der Wärmeübertragung ist eine bislang noch nicht zur Zufriedenheit gelöste Aufgabe, vor allem nicht durch die vorstehend im Stand der Technik bekannten Mittel, die diese Problematik nicht untersucht haben.

Obwohl organische Konditionierungsmittel, enthaltend auch filmbildende Amine zur Korrosionsbekämpfung, und auch Kesselsteinverhütung bekannt waren, wurde die Wirkung von Aminen im Wasserdampfkreislauf zur Verbesserung des Wärmeüberganges nicht vermutet, wenngleich auch schon dazu Untersuchungen aus 2003 gab.

In der Publikation VGB Power Tech, 9/2003 mit dem Titel: "Sind Amine eine Alternative zu herkömmlichen Konditionierungsmitteln für Wasser-Dampf-Kreisläufe?" von Prof. Steinbrecht konnte in der einer Modellapparatur festgestellt werden, dass weder Na₃PO₄ noch die Amine sich zu negativ auf den Wärmeübergang auswirken, vor allem im technisch interessanten Bereich der in Großwasserraumkesseln realisierten Wärmestromdichten < 500 kW / m². Die hier untersuchten Mittel mit den Handelsnamen "Helamin" und "Odacon" sind bzw. enthalten organische, Amine.

Die von Prof. Steinbrecht entwickelte Modellapparatur erschien in diesem Zusammenhang geeignet zu sein, um auch die hier erfindungsgemäß entwickelte Mischung auf ihre Eignung und Wirkung in Dampfkesseln beim Wärmeübergang zu untersuchen.

Es wurde erwartet, dass der Einsatz des neuen Mittels aufgrund der ähnlichen Struktur des Mittels keine wesentlichen Unterschiede zu den bekannten Produkten aufweisen würde.

Bei diesen Untersuchungen haben die Erfinder jedoch überraschend festgestellt, dass die Verwendung des Mittels gemäß Anspruch 1 zu einer starken Verbesserung des Wärmeübergangs führte, ein Ergebnis, das man mit der Messung des wasserseitigen Wärmeübergangskoeffizienten quantifizieren konnte.

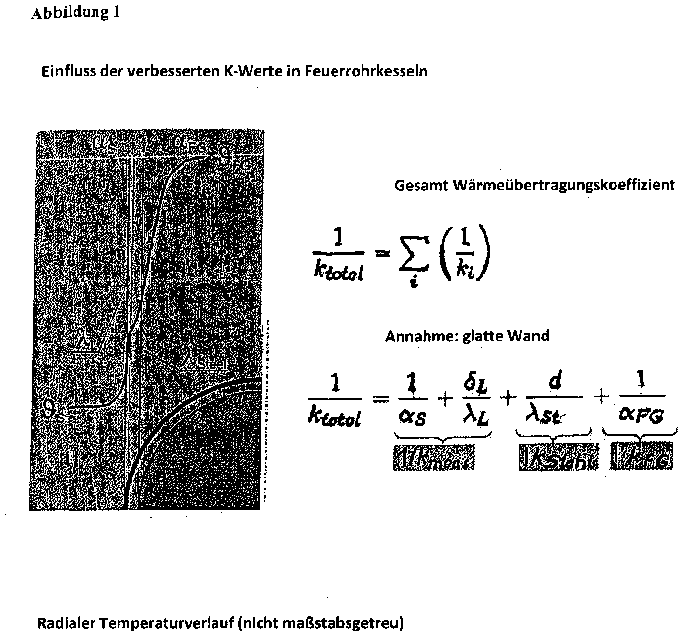

In der technischen Thermodynamik wird der Wärmeübergangskoeffizient oder K-Wert, gemäß dem Algorithmus dargestellt auf der Abbildung 1 berechnet.

Der gesamte Wärmeübergangskoeffizient setzt sich aus verschiedenen Anteilen zusammen:
1) dem Wärmeübergangskoeffizienten vom Verbrennungsgas auf das Rohr (K_{FG}),
2) der Wärmeleitfähigkeit des Rohres (K_{Steel}) und
3) dem Wärmeübergangskoeffizienten vom Rohr auf die Dampf/Wasserphase (Kₘₑₐₛ). Siehe hierzu die folgende Skizze:
   Die Erfinder haben eine deutliche Verbesserung von Kₘₑₐₛ festgestellt und zwar auf blanken Rohren - delta_{L} = 0 (L ist die Dicke der Schicht auf dem Rohr) - bis hin zum thermisch stationären Zustand delta_{L}>0. K_{Steel} ist während der Versuchsdauer konstant. Die Heizung des Rohres und damit die Verbrennungsgasseite (K_{FG}) erfolgte elektrisch und kann daher ebenfalls als konstant betrachtet werden.

Dabei ist zu betonen, dass der gemessene Effekt der Verbesserung von Kₘₑₐₛ nicht auf die bekannte indirekte Verbesserung durch Verhinderung von anorganischen Belägen aus den Wasserinhaltsstoffen, z. B. Calciumcarbonat, zurückzuführen ist. Dieses wurde durch Verwendung von vollentsalztem Wasser als Speisewasser sichergestellt.

Die Erfindung wird nun anhand der Ansprüche näher spezifiziert:
1. Verwendung eines Mittels zur Verbesserung des Wärmeübergangskoeffizienten vom Rohr auf die Dampf-/Wasserphase in Dampferzeugeranlagen, enthaltend mindestens ein filmbildendes Amin (Komponente a) mit der allg. Formel
   a. R-(NH-(CH₂)ₘ)ₙ-NH₂, wobei R ein aliphatischer Kohlenwasserstoffrest mit einer Kettenlänge zwischen 12 und 22 ist und m eine ganze Zahl zwischen 1 und 8 und n eine ganze Zahl zwischen 0 und 7 ist, in Mengen bis 15 % enthält, wobei die Konzentration des filmbildenden Amins (Komponente a) im Kondensat 0,05-2 ppm beträgt.
2. Verwendung des Mittels nach Anspruch 1, wobei die Konzentration des filmbildenden Amins (Komponente a) im Kondensat 0,1-1 ppm beträgt.
3. Verwendung des Mittels zur Verbesserung des Wärmeübergangskoeffizienten in Dampferzeugeranlagen, nach Anspruch 1 oder 2, dadurch gekennzeichnet, dass es neben dem filmbildenden Amin noch eine oder mehrere Komponenten b bis d enthält:
   b. ein oder mehrere alkalisierende Aminoalkanole der Formel ZO-Z'-NR'R", wobei Z und Z' eine C₁-C₆-geradkettige oder verzweigte Alkylgruppe oder Wasserstoff darstellen und gleich oder verschieden sein können, und R' und R" eine C₁-C₄-Alkylgruppe oder Wasserstoff darstellen und gleich oder verschieden sein können, in Mengen bis 50%,
   c. ein oder mehrere Dispergiermittel ausgewählt aus Verbindungen mit der allgemeinen Strukturformel in einer Menge bis 5 Gew. %, 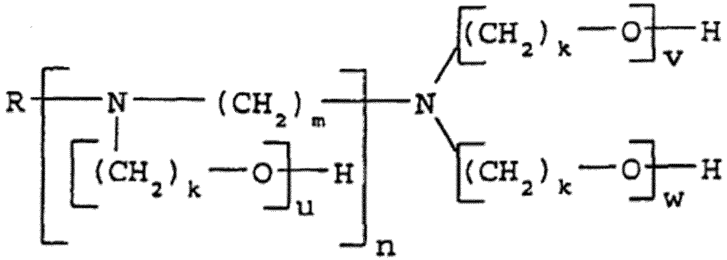 wobei R eine aliphatische Alkylgruppe mit einer Kettenlänge von C₆ bis C₂₂ ist, k eine Zahl zwischen 2 und 3, die Parameter u, v und w ganze Zahlen bedeuten, wobei sich die Summe von v +w+ (nu) zwischen 2 und 22 bewegt, und/oder einer Verbindung mit der Formel R³-C-O-((CH₂)ₒ-O-)ₚ-Z', wobei R³ eine aliphatische Alkylgruppe (gesättigt oder ungesättigt) mit einer Kettenlänge zwischen C₆ und C₂₂ darstellt, Z' wie oben definiert ist, o eine ganze Zahl zwischen 1 und 4 ist, (Grenzen eingeschlossen), p eine ganze Zahl zwischen 2 und 22 ist, (Grenzen eingeschlossen),
   d. Wasser zur Ergänzung bis 100 Gew. -%.
4. Verwendung des Mittels nach Anspruch 1 bis 3, dadurch gekennzeichnet, dass als filmbildendes Amin (Komponente a) bevorzugt die Verbindung Octadecenylpropan-1,3-diamin in Mengen von 0,5 bis 5 Gew.-% eingesetzt wird.
5. Verwendung des Mittels nach Anspruch 1 bis 4, dadurch gekennzeichnet, dass als Komponente b , bevorzugt in Mengen bis 30%. Ammoniak und/oder Cyclohexylamin und/oder Morpholin, und/oder Diethylaminoethanol und/oder Aminomethylpropanol eingesetzt wird.
6. Verwendung des Mittels nach Anspruch 1 bis 5, dadurch gekennzeichnet, dass als Komponente c bevorzugt in Mengen von 0,5 bis 1 Gew.-% die Verbindung ethoxyliertes Talg-Amin mit 15 bis 20-EO Einheiten eingesetzt wird.

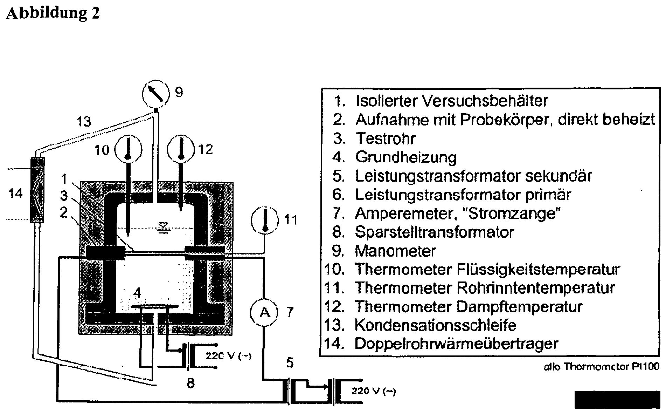

Nicht Gegenstand der erfinderischen Verwendung ist die speziell für die Messung des Wärmeüberganges konzipierte Modellapparatur bzw. Meßeinrichtung, die hier schematisch in der Abbildung 2 wiedergegeben wird.

### Versuchsdurchführung:

Eine speziell für die Untersuchung des Wärmeübergangs beim Behältersieden konzipierte Versuchsanordnung ermöglichte die experimentelle Ermittlung des Wärmedurchgangskoeffizienten k und die Kennzeichnung von Oberflächeneffekten, da das Siedeverhalten der Probeheizflächen maßgeblich durch ihre (mikro-) geometrischen Eigenschaften (Dicke, Porosität/Rauigkeit) beeinflusst wird.

Das Ziel der Messung war die Ermittlung druck- und zeitabhängiger Siedekennlinien konditionierter Kesselsysteme in Abhängigkeit von der aufgeprägten Wärmestromdichte q im Versuchsmaßstab. Ziel der Untersuchungen war außerdem, die besonders überraschende Eignung des Mittels gemäß Anspruch 1 im Vergleich mit Mitteln nach dem Stand der Technik zu zeigen.

Die Versuchseinrichtung zur Simulation kesselnaher Bedingungen besteht aus zwei voneinander hermetisch getrennten baugleichen Druckgefäßen. So sind zeitgleich Untersuchungen zweier verschiedener Wasserbehandlungen möglich.

Eine in den Apparat unter dem freien Wasserspiegel getaucht eingebaute Rohrheizfläche erzeugt Sattdampf der entsprechenden Druckstufe. Dieses auswechselbare prozessdicht eingebrachte, kalt gezogene Präzisionsstahlröhrchen der Dimension (6x1) mm wird mit Hilfe eines Hochleistungstransformators über die Stromzuführungen direkt widerstandsbeheizt. Der Abbildung 2 kann die schematische Darstellung des gesamten Versuchsaufbaus entnommen werden.

### Vorbehandlung der Rohre

Um eine möglichst gute Reproduzierbarkeit des Einzelversuchs zu gewährleisten, werden die Rohrproben nach dem Einlöten in die Stromzuführungen chemisch gereinigt und aktiviert. Dieser Vorgang erfolgt unter Einsatz einer sauren Beizlösung, die oberflächliche Oxidationsprodukte sowie Verunreinigungen entfernt, die bei Herstellung, Lagerung oder Transport der Präzisionsrohre mit diesen in Kontakt kamen. Die Behandlung geschieht wie folgt:
1. Entfernung organischer Verunreinigungen mit Aceton
2. Aktivierung der Rohroberfläche mit einer sauren Beizlösung (25 % HCl, 5 % HNO₃, VE-Wasser) im Tauchverfahren für eine Dauer von 6 min
3. Spülen mit Leitungswasser (1 - 2 min)
4. Neutralisierung in 10 % Sodalösung im Tauchverfahren
5. Spülen mit VE-Wasser (1 - 2 min)
6. Spülen mit Isopropanol und anschließende Trocknung bei 105 °C im Trockenschrank (für 20 min)

Das getrocknete Siederohr wird fotografiert und im heißen Zustand - elektrisch isoliert vom Versuchsgefäß - in dieses eingebracht. Die elektrischen Leitungen werden montiert, der Sensor für die Rohrinnentemperatur (durch ein Keramikrohr isoliert) so positioniert, dass er sich geometrisch mittig im Rohr befindet und das Behältnis mit konditioniertem Wasser (ca. 4,2 1) befüllt.

### Versuchsprogramm

Das Versuchsprogramm umfasst folgende Punkte während der Langzeitbehandlung bei einem Sättigungsdruck von pₛ = 15 bar und wiederkehrender Bestimmung des Wärmedurchgangskoeffizienten bei verschiedenen Druckstufen (2, 15 bar).
1. Referenzbehandlung metallisch blanker Rohre mit Trinatriumphosphat bis zur messtechnisch nachgewiesenen Stationarität der Oxidschicht
2. Behandlung metallisch blanker Probekörper mit dem Mittel (EGM) bis zur Stationarität
3. Wechsel der Behandlung von Trinatriumphosphat auf EGM, weiterführende Behandlung mit dem organischen Produkt bis zur nachweislichen Stationarität der Wärmedurchgangskoeffizienten.

Die Startkonditionierungen für die Referenzbehandlung mit Trinatriumphosphat sowie die Arbeit mit dem Mittel (EGM) sind in der folgenden Tabelle 1 zusammengefasst.

Das EGM enthält bei diesem Versuch folgende Komponenten:
a. 2 Gew.-% Oleylpropylendiamin
b. 7 Gew.-% Cyclohexylamin
c. 18 Gew.-% Monoethanolamin
d. 0,5 Gew.-% nichtionisches Tensid
e. Rest Wasser auf 100 %

Das Mittel ist jedoch nicht auf diese Zusammensetzung beschränkt, sie ist lediglich eine beispielhafte Variante.

**Tabelle 1: Eigenschaften des Kesselwassers zu Beginn der Wasserbehandlung.**

| Konditionierungsmittel | Konzentration in ppm | pH-Wert Kesselwasser (25 °C) | pH-Wert Kondensat (25 °C) | Leitfähigkeit in mS/cm |
|---|---|---|---|---|
| Na₃PO₄ | 15 - 25 | 10,0 - 10,5 | 7 - 7,5 | 100 - 140 |
| EGM Mittel | 0,5 - 1,0 | > 8 | > 9 | 60 - 80 |

### Gewährleistung der Betriebsbedingungen

Um die in Tabelle 1 vorgestellten Bedingungen im Kessel sicherzustellen, wird regelmäßig die Konzentration der applizierten Kesseladditive bestimmt, um entsprechend nachzudosieren bzw. bei zu hoher Konzentration entgegenzusteuern.

Bei der anorganischen Fahrweise dient als Regelgröße der pH-Wert des Kesselwassers, der im Bereich 10,0≤ pH ≤10,5 liegen sollte. Da der pH-Wert im Batchbetrieb diskontinuierlich bestimmt wird, erfolgt der Angleich an den Sollwert ebenfalls diskontinuierlich. Dazu wird nach Probennahme (ca. 50 ml) ein Volumen von ca. 1 1 Kesselwasser bei Unterschreiten des unteren pH-Grenzwertes entnommen und durch ein entsprechend konditioniertes Äquivalent ersetzt, sowie anschließend mehrfach entgast. Sollte pH-Wert genügen, werden keine Maßnahmen ergriffen, um möglichst wenig in die Oxidschichtbildung einzugreifen.

Der Austausch eines kleinen Wasservolumens stellt sicher, dass der Rohrprobekörper dauerhaft unter den freien Wasserspiegel getaucht bleibt. Da der Satzbetrieb eine Aufkonzentrierung nicht dampfflüchtiger Komponenten während der Behandlungsdauer mit sich bringt, die beim angesprochenen Wassertausch nur bedingt abgeführt werden, ergeben sich teilweise erhöhte Phosphatgehalte (bis 50 ppm) und elektrische Leitfähigkeiten (bis 180 mS/cm) zum Ende der Laufzeit von bis zu τ = 1000 *h.*

Bei der Wasserbehandlung mit dem Mittel ist die Richtgröße die Konzentration des freien filmbildenden Amins (fA) im Kondensat. Zur Bestimmung wird je eine Probe aus der Flüssigkeit und dem Kondensat entnommen. Ein kalibrierter photometrischer Test gibt Auskunft über die enthaltene Menge filmbildenden Amins. Befindet sich der Istwert unterhalb des Sollwert-Fensters von 0,5 *ppm* < [*fA*] < 1,0 *ppm*, so wird durch die Zugabe von der Formulierung über ein N₂-Überdruckdosiersystem nachgeregelt. Bei größeren Volumina kommt gegebenenfalls eine Dosierpumpe zum Einsatz. Je nach ermittelter Konzentration im Kessel werden bis zu 230 µl Formulierung nachdosiert. Ein Wasseraustausch analog zum Phosphatbetrieb wird hier nicht vorgenommen.

Sollte ein Überschuss detektiert werden, wird dem ebenfalls durch Austausch eines Volumens von 1 1 VE-Wasser entgegengewirkt.

Durch unvermeidbare Leckagen an Ventilsitzen und Rohrverbindungen verliert das System während der Behandlungsdauer Wasser bzw. vorrangig Wasserdampf und somit dampfflüchtige Komponenten. Deshalb wird die Nachdosierung so bemessen, dass nach Anpassung kurzzeitig der obere Grenzwert (ca. 1 ppm) an filmbildendem Amin im Kondensat vorliegt. Im Mittel kann der o. g. Konzentrationsbereich durch regelmäßige Überwachung zu jedem Zeitpunkt eingehalten werden.

### Messwertaufnahme

Für die Erstellung einer Siedekennlinie werden bis zu neun Wärmestromdichten pro Druckstufe untersucht.

Aufgrund des Wärmeeintrags in das Kesselwasser resultiert bei kleinen bzw. sehr großen Wärmestromdichten eine gewisse Instationarität des Betriebspunktes. D. h. bei hohen Sättigungsdrücken mit entsprechend hohen Wärmeverlusten und kleiner Wärmestromdichte unterliegt die Sättigungstemperatur einem negativen Trend. Der Umkehrfall gilt für kleine Sättigungsdrücke und hohe Wärmestromdichten. Diesem Phänomen wird durch Zuheizen mit der Hilfsheizung (nur im Bereich des Blasensiedens) entgegengewirkt.

Eine weitere Maßnahme besteht in dem "Durchfahren" des eigentlichen Betriebspunktes aufgrund der Abkühlung/ Aufheizung des Systems. Eine anschließende Mittelwertbildung der Messwerte (die eine maximale Temperaturabweichung von 0,5°K zur gewünschten Sättigungstemperatur aufweisen) garantiert die Weiterverarbeitung repräsentativer Messwerte.

Die genannte Mittelwertbildung und Korrektur der systematischen Messfehler der Temperatur bzw. Strommessung geschieht - gleichermaßen wie die Ermittlung des Wärmedurchgangskoeffizienten - innerhalb einer elektronischen Auswerteroutine unter Matlab®.

**Tabelle 2 (Stand der Technik)**

| | | Pₛ= 2 bar | | p_{,}=15 bar | |
|---|---|---|---|---|---|
| Behandlung | Behandlungs dauer in h | Wärme fluß dichte in W/m² | Wärmeüber Gangs Koeffizient in W/m²K) | Wärme fluß dichte in W/m² | Wärmeüber Gangs Koeffizient in W/m²K) |
| Na₃PO₄ | 0 | 40000 | 5419,0 | 40000 | 11634,6 |
| | | 50000 | 6418,3 | 50000 | 13401,4 |
| | | 60000 | 7370,2 | 60000 | 15042,3 |
| | | 70000 | 8284,4 | 70000 | 16585,6 |
| | | 80000 | 9167,4 | 80000 | 18049,8 |
| | | 80000 | 10024,1 | 80000 | 19448,3 |
| | | 100000 | 10858,1 | 100000 | 20790,8 |
| | | 200000 | 18368,9 | 200000 | 32254,8 |
| | | 300000 | 24983,3 | 300000 | 41702,3 |
| | | 400000 | 31075,3 | 400000 | 50040,0 |
| | | 500000 | 36806,3 | 500000 | 57638,9 |
| | | 600000 | 42265,0 | 600000 | 64696,8 |
| | 300 | 40000 | 4141,9 | 40000 | 8039,5 |
| | | 50000 | 4905,6 | 50000 | 9260,4 |
| | | 60000 | 5633,2 | 60000 | 10394,3 |
| | | 70000 | 6331,9 | 70000 | 11460,7 |
| | | 80000 | 7006,8 | 80000 | 12472,5 |
| | | 90000 | 7661,6 | 90000 | 13438,9 |
| | | 100000 | 8299,0 | 100000 | 1436,6 |
| | | 200000 | 14039,7 | 200000 | 22288,2 |
| | | 300000 | 19095,1 | 300000 | 28816,5 |
| | | 400000 | 23751,4 | 400000 | 34577,9 |
| | | 500000 | 28131,6 | 500000 | 39828,8 |
| | | 600000 | 32303,8 | 600000 | 44705,8 |

**Tabelle 3 Erfindung**

| | | | pₛ= 2 bar | pₛ=15 bar | |
|---|---|---|---|---|---|
| Behandlung mit | Behandlungs dauer in h | Wärme fluß dichte in W/m² | Wärmeüber Gangs-Koeffizient in W/m²K) | Wärme fluß dichte in W/m² | Wärmeüber Gangs Koeffizient in W/m²K) |
| EGM | 0 | 40000 | 7254,0 | 40000 | 23994,3 |
| | | 50000 | 8575,0 | 50000 | 26754,4 |
| | | 60000 | 9830,9 | 60000 | 29243,7 |
| | | 70000 | 11035,3 | 70000 | 31528,3 |
| | | 80000 | 12197,2 | 80000 | 33651,1 |
| | | 90000 | 13323,2 | 90000 | 35641,8 |
| | | 100000 | 14418,3 | 100000 | 37522,2 |
| | | 200000 | 24243,4 | 200000 | 52623,7 |
| | | 300000 | 32855,6 | 300000 | 64136,9 |
| | | 400000 | 40763,9 | 400000 | 73803,0 |
| | | 500000 | 48186,8 | 500000 | 82293,1 |
| | | 600000 | 55244,7 | 600000 | 89950,0 |
| | 300 | 40000 | 5913,8 | 40000 | 18695,8 |
| | | 50000 | 6990,7 | 50000 | 20846,5 |
| | | 60000 | 8014,6 | 60000 | 22786,2 |
| | | 70000 | 8996,5 | 70000 | 24566,3 |
| | | 80000 | 9943,8 | 80000 | 26220,3 |
| | | 90000 | 10861,7 | 90000 | 27771,4 |
| | | 100000 | 11754,5 | 100000 | 29236,6 |
| | | 200000 | 19764,4 | 200000 | 41003,4 |
| | | 300000 | 26785,5 | 300000 | 49974,3 |
| | | 400000 | 33232,7 | 400000 | 57506,0 |
| | | 500000 | 39284,3 | 500000 | 64121,2 |
| | | 600000 | 45038,1 | 600000 | 70087,4 |

In den Tabellen 2 und 3 sind die Ergebnisse der Untersuchung mit dem Produkt des Standes der Technik und mit dem Produkt (EGM) demonstriert. Man erkennt sofort, dass sich der Wärmeübergangskoeffizient W/m² gegenüber dem Produkt nach dem Stand der Technik deutlich verbessert bzw. erhöht. Je höher nämlich der Koeffizient, desto besser ist der Wärmeübergang.

Der Effekt der Verbesserung des Wärmeübergangskoeffizienten des EGM bleibt auch erhalten, wenn die Rohre zunächst bis zum Erreichen der thermischen Stationarität nach dem Stand der Technik (Na₃PO₄) behandelt werden und danach das EGM zur Konditionierung eingesetzt wird.

**Tabelle 4:**

| | | | pₛ= 2 bar | | pₛ=15 bar |
|---|---|---|---|---|---|
| Behandlung mit | Behandlungsdauer in h | Wärme Fluß dichte in W/m² | Wärmeüber Gangs Koeffizient in W/m²K) | Wärme Fluß dichte in W/m² | Wärmeüber Gangs Koeffizient in W/m²K) |
| EGM nach Na₃PO₄ | 0 | 40000 | 6187,0 | 40000 | 17048,1 |
| | | 50000 | 7176,6 | 50000 | 18995,4 |
| | | 60000 | 8101,5 | 60000 | 20750,5 |
| | | 70000 | 8975,9 | 70000 | 22360,3 |
| | | 80000 | 9809,3 | 80000 | 23855,4 |
| | | 90000 | 10608,4 | 90000 | 25257,0 |
| | | 100000 | 11378,2 | 100000 | 26580,4 |
| | | 200000 | 18039,8 | 200000 | 371940 |
| | | 300000 | 23622,0 | 300000 | 45271,6 |
| | | 400000 | 28601,6 | 400000 | 52045,7 |
| | | 500000 | 33176.2 | 500000 | 57990,7 |
| | | 600000 | 37452,0 | 600000 | 63348,8 |
| | 450 | 40000 | 5599,2 | 40000 | 14549.2 |
| | | 50000 | 64947 | 50000 | 16211,1 |
| | | 60000 | 73318 | 60000 | 17708,9 |
| | | 70000 | 8123,1 | 70000 | 19082,8 |
| | | 80000 | 8877,3 | 80000 | 20358,8 |
| | | 90000 | 9600,5 | 90000 | 21554,9 |
| | | 100000 | 10297,2 | 100000 | 22684,3 |
| | | 200000 | 163259 | 200000 | 31742,2 |
| | | 300000 | 21377,7 | 300000 | 38635,8 |
| | | 400000 | 25884,2 | 400000 | 44417,0 |
| | | 500000 | 30024,1 | 500000 | 49490,6 |
| | | 600000 | 33893,7 | 600000 | 54063,3 |

## Patentansprüche

1. Verwendung eines Mittels zur Verbesserung des Wärmeübergangskoeffizienten vom Rohr auf die Dampf-/Wasserphase in Dampferzeugeranlagen, enthaltend mindestens ein filmbildendes Amin (Komponente a) mit der allg. Formel:
a. R-(NH-(CH₂)ₘ)ₙ-NH₂, wobei R ein aliphatischer Kohlenwasserstoffrest mit einer Kettenlänge zwischen 12 und 22 ist und m eine ganze Zahl zwischen 1 und 8 und n eine ganze Zahl zwischen 0 und 7 ist, in Mengen bis 15 Gew. %, wobei
die Konzentration des filmbildenden Amins (Komponente a) im Kondensat von 0,05 bis 2 ppm beträgt.

2. Verwendung des Mittels nach Anspruch 1, **dadurch gekennzeichnet, dass** die Konzentration des filmbildenden Amins (Komponente a) im Kondensat von 0,1 bis 1 ppm beträgt.

3. Verwendung des Mittels, nach Anspruch 1 oder 2, **dadurch gekennzeichnet, dass** neben dem filmbildenden Amin noch eine oder mehrere Komponenten b bis d enthalten sind:
b. ein oder mehrere alkalisierende Aminoalkanole der Formel ZO-Z'-NR'R", wobei Z und Z' eine C₁-C₆-geradkettige oder verzweigte Alkylgruppe oder Wasserstoff darstellen
und gleich oder verschieden sein können,
und R' und R" eine C₁-C₄-Alkylgruppe oder Wasserstoff darstellen und gleich oder verschieden sein können, in Mengen bis 50 Gew. %.
c. ein oder mehrere Dispergiermittel ausgewählt aus Verbindungen mit der allgemeinen Strukturformel in einer Menge bis 5 Gew. %, 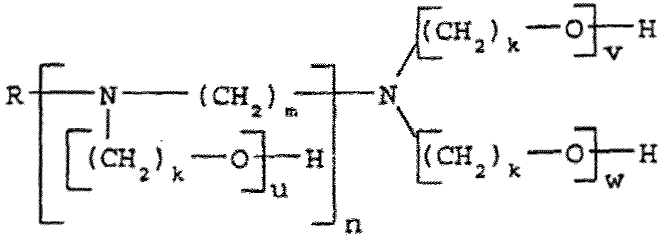 wobei R eine aliphatische Alkylgruppe mit einer Kettenlänge von C₆ bis C₂₂ ist, k eine Zahl zwischen 2 und 3, die Parameter u, v und w ganze Zahlen bedeuten, wobei die Summe von v+w+(nu) zwischen 2 und 22 sich bewegt, und/oder Verbindungen mit der Formel R³-C-O-((CH₂)_{O}-O-)ₚ-Z', wobei R³ eine aliphatische Alkylgruppe (gesättigt oder ungesättigt) mit einer Kettenlänge zwischen C₆ und C₂₂ darstellt und Z' wie oben definiert ist, o eine ganze Zahl zwischen 1 und 4 ist, Grenzen eingeschlossen, p eine ganze Zahl zwischen 2 und 22 ist, Grenzen eingeschlossen,
d. Wasser zur Ergänzung bis 100 Gew.-%.

4. Verwendung des Mittels nach einem der Ansprüche 1 bis 3, **dadurch gekennzeichnet, dass** als filmbildendes Amin (Komponente a) die Verbindung Octadecenylpropan-1,3-diamin in Mengen von 0,5 bis 5 Gew.-% eingesetzt wird.

5. Verwendung des Mittels nach einem der Ansprüche 1 bis 4, **dadurch gekennzeichnet, dass** als Komponente b, in Mengen bis 30 Gew. % Ammoniak und/oder Cyclohexylamin und/oder Morpholin, und/oder Diethylaminoethanol und/oder Aminomethylpropanol eingesetzt wird.

6. Verwendung des Mittels nach einem der Ansprüche 1 bis 5, **dadurch gekennzeichnet, dass** als Komponente c in Mengen von 0,5 bis 1 Gew.-% die Verbindung ethoxyliertes Talg-Amin mit 15 bis 20-EO Einheiten eingesetzt wird.

## Claims

1. Use of a medium for improving the heat transfer coefficient of the tube on the steam/water phase in steam generating plants comprising at least one film-forming amine (component a) with the general formula:
a. R- (NH-(CH₂)ₘ)ₙ-NH₂, wherein R is an aliphatic hydrocarbon radical with a chain length between 12 and 22, and m is a whole number between 1 and 8 and n is a whole number between 0 and 7 in amounts of up to 15% by weight,
wherein the concentration of the film-forming amine (component a) in the condensate is in the range of 0.05 to 2 ppm.

2. Use of the medium according to claim 1, **characterized in that** the concentration of the film-forming amine (component a) in the condensate is in the range of 0.1 to 1 ppm.

3. Use of the medium according to claim 1 or 2, **characterized in that** one or several components b) to d) are comprised in addition to the film-forming amine:
b. one or several alkalizing aminoalkanols of the formula ZO-Z'-NR'R", wherein Z and Z' represent a C₁-C₆ straight-chain or branched alkyl group or hydrogen
and can be identical or different,
and R' and R" represent a C₁-C₄ alkyl group or hydrogen and can be identical or different, in amounts of up to 50% by weight,
c. one or several dispersing agents selected from compounds with the general structural formula in an amount of up to 5% by weight, 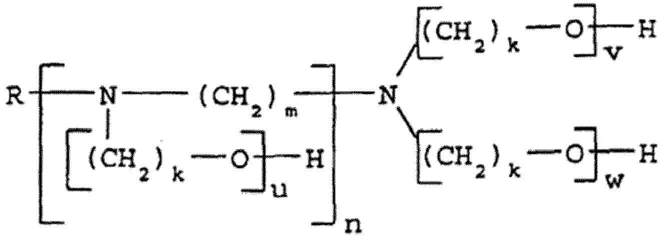 wherein R is an aliphatic alkyl group with a chain length of C₆ to C₂₂, k represents a number between 2 and 3, the parameters u, v and w represent whole numbers, wherein the sum of v+w+(nu) is between 2 and 22 and/or compounds with the formula R³-C-O-((CH₂)ₒ-O-)ₚ-Z', wherein R³ represents an aliphatic alkyl group (saturated or unsaturated) with a chain length between C₆ and C₂₂ and Z' is as defined above, o represents a whole number between 1 and 4 including the boundaries, p represents a whole number between 2 and 22 including the boundaries, and
d. water to make up the difference to 100% by weight.

4. Use of the medium according to any one of claims 1 to 3, **characterized in that** the compound octadecenylpropane-1,3-diamine in amounts of 0.5 to 5% by weight is used as the film-forming amine (component a).

5. Use of the medium according to any one of claims 1 to 4, **characterized in that** ammonia and/or cyclohexylamine and/or morpholine, and/or diethylaminoethanol and/or aminomethylpropanol in amounts of up to 30% by weight are used as component b.

6. Use of the medium according to any one of claims 1 to 5, **characterized in that** the compound ethoxylated tallow amine containing 15 to 20 EO units in amounts of 0.5 to 1% by weight is used as component c.

## Revendications

1. Utilisation d'un agent pour améliorer le coefficient de transfert de chaleur depuis le tube vers la phase vapeur/eau dans des unités de génération de vapeur, contenant au moins une aminé filmogène (composant a) de la formule générale :
a. R-(NH-(CH₂)ₘ)ₙ-NH₂, R étant un radical hydrocarboné aliphatique ayant une longueur de chaîne comprise entre 12 et 22 et m étant un nombre entier compris entre 1 et 8 et n étant un nombre entier compris entre 0 et 7, en des quantités de jusqu'à 15 % en poids,
la concentration de l'amine filmogène (composant a) dans le condensat étant de 0,05 à 2 ppm.

2. Utilisation de l'agent selon la revendication 1, **caractérisée en ce que** la concentration de l'amine filmogène (composant a) dans le condensat est de 0,1 à 1 ppm.

3. Utilisation de l'agent selon la revendication 1 ou 2, **caractérisée en ce qu'**outre l'amine filmogène, un ou plusieurs composants b à d sont encore contenus :
b. un ou plusieurs aminoalcanols alcalinisants de la formule ZO-Z'-NR'R", Z et Z' représentant un groupe alkyle linéaire ou ramifié en C₁-C₆ ou l'hydrogène,
et pouvant être identiques ou différents,
et R' et R" représentant un groupe alkyle en C₁-C₄ ou l'hydrogène et pouvant être identiques ou différents, en des quantités de jusqu'à 50 % en poids ;
c. un ou plusieurs agents dispersants choisis parmi les composés ayant la formule structurale générale en une quantité de jusqu'à 5 % en poids, 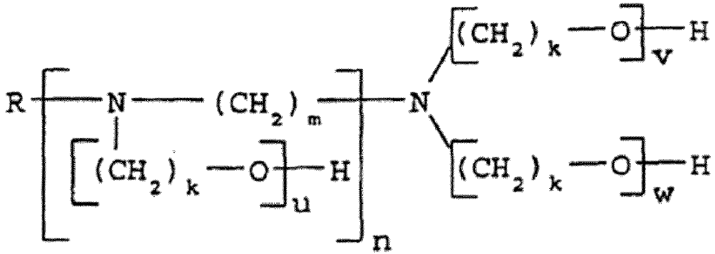 R étant un groupe alkyle aliphatique ayant une longueur de chaîne de C₆ à C₂₂, k étant un nombre compris entre 2 et 3, les paramètres u, v et w signifiant des nombres entiers, la somme de v+w+(nu) variant entre 2 et 22, et/ou les composés de la formule R³-C-O-((CH₂)ₒ-O-)ₚ-Z', R³ représentant un groupe alkyle aliphatique (saturé ou insaturé) ayant une longueur de chaîne comprise entre C₆ et C₂₂ et Z' étant tel que défini précédemment, o étant un nombre entier compris entre 1 et 4, limites inclues, p étant un nombre entier compris entre 2 et 22, limites inclues ;
d. de l'eau pour compléter jusqu'à 100 % en poids.

4. Utilisation de l'agent selon l'une quelconque des revendications 1 à 3, **caractérisée en ce que** le composé octadécénylpropane-1,3-diamine est utilisé en tant qu'aminé filmogène (composant a) en des quantités de 0,5 à 5 % en poids.

5. Utilisation de l'agent selon l'une quelconque des revendications 1 à 4, **caractérisée en ce que** de l'ammoniac et/ou de la cyclohexylamine et/ou de la morpholine et/ou du diéthylaminoéthanol et/ou de l'aminométhylpropanol sont utilisés en tant que composant b, en des quantités de jusqu'à 30 % en poids.

6. Utilisation de l'agent selon l'une quelconque des revendications 1 à 5, **caractérisée en ce que** le composé aminé de suif éthoxylée contenant 15 à 20 unités EO est utilisé en tant que composant c en des quantités de 0,5 à 1 % en poids.
